# EUROPÄISCHE PATENTANMELDUNG

(11) **EP 0 647 409 A1**
(43) Veröffentlichungstag der Anmeldung: **12.04.1995**
(21) Anmeldenummer: 94111921.6
(22) Anmeldetag: 30.07.1994
(51) Int. Cl.: A23P 1/10, A23L 1/325, A23L 1/31

(54) **Verfahren zum Portionieren eines quaderförmigen Blockes aus tiefgefrorenem Lebensmittel**

(30) Priorität: 06.10.1993 DE 4334107
(71) Anmelder: HEINZ NIENSTEDT MASCHINENFABRIK GMBH, D-45721 Haltern (DE)
(72) Erfinder: Rosenberger, Jörg, D-45721 Haltern (DE); Book, Franz, D-45721 Haltern (DE)
(74) Vertreter: Cohausz & Florack

(57) **Zusammenfassung**

Um beim Portionieren eines quaderförmigen Blockes aus tiefgefrorenem Lebensmittel zu einer höheren Ausbeute zu kommen, wird eine Kombination von mehrstufigem Teilen in immer kleinere, gleichformatige Einheiten und Umformen angewandt.

## Beschreibung

Die Erfindung bezieht sich auf ein Verfahren zum Portionieren eines quaderförmigen Blockes aus tiefgefrorenem Lebensmittel, insbesondere Fisch oder Fleisch, durch mehrstufiges Teilen in von Stufe zu Stufe kleinere, gleichformatige Einheiten mit geraden Schnittflächen.

In der Regel erfolgt das Teilen eines tiefgefrorenen Lebensmittelsblockes mittels mehrerer Sägeblätter oder Sägebänder. Damit der dabei anfallende Anteil an zerspantem Gut möglichst klein gehalten wird, setzt man möglichst dünnblättrige Sägeblätter, insbesondere mit Diamantsplittern besetzte Scheiben, ein. Ein großer Teil des dabei entstehenden zerspanten Gutes kann aufgefangen und wieder auf die kleineren Einheiten aufgetragen werden. Durch diese Maßnahmen läßt sich der Schnittverlust minimieren.

Allein mit dieser Art der Minimierung des Schnittverlustes läßt sich aber nicht in jedem Fall eine maximale Ausbeute an Portionen aus einem quaderförmigen Block erreichen. Das liegt daran, daß bei einem in seinem Format vorgegebenen Block (l = 482 mm; b = 254 mm; h = 62,7 mm) Portionen mit einem bestimmten Gewicht (mindestens 67 g) und im wesentlichen vorgegebenem Format durch mehrstufiges Teilen in immer kleinere gleichformatige Einheiten (l = 126,7; b = 70/25,32 mm, h = 12,06 mm) in der Regel nur unter Inkaufnahme eines gewissen Übergewichtes der einzelnen Portionen erreicht werden kann, wenn nicht ein nicht aufteilbarer Rest beim Portionieren übrigbleiben soll.

Der Erfindung liegt die Aufgabe zugrunde, ein Verfahren der eingangs genanten Art hinsichtlich der Ausbeute der Portionen aus dem quaderförmigen Block aus tiefgefrorenem Lebensmittel zu verbessern.

Diese Aufgabe wird dadurch gelöst, daß die kleineren Einheiten nach mehreren Teilungsstufen, mindestens jedoch nach der letzten Teilungsstufe durch Pressen derart umgeformt werden, daß die dabei erhaltene Form entweder die gewünschte Endform ist oder für die weitere (n) Teilungsstufe (n) hinsichtlich der gewünschten Endform günstiger ist.

Bei dem erfindungsgemäßen Verfahren ist das Augenmerk beim Teilen primär auf das vorgegebene Endgewicht ohne Rücksicht auf die Endform gerichtet. Deshalb ist es möglich, das vorgegebene Gewicht pro Portion exakt einzuhalten. Die Endform spielt dabei eine untergeordnete Rolle, weil sie durch den Umformvorgang erreicht werden kann. Deshalb lassen sich die Schnitte beim mehrstufigen Teilen auch so legen, daß die Summe der Schnittflächen beim mehrstufigen Teilen im Vergleich zu einem Verfahren, bei dem ausschließlich durch mehrstufiges Teilen die Portionen erhalten werden, kleiner ist. Das hat den weiteren Effekt, daß der nicht zu vermeidende Schnittverlust klein gehalten werden kann. Da mit dem erfindungsgemäßen Verfahren das vorgegebene Gewicht der Portion sehr genau eingehalten werden kann, braucht kein Zusatzgewicht mehr verschenkt zu werden. Im Vergleich zu einem bekannten Verfahren, bei dem das Portionieren ausschließlich durch mehrstufiges Teilen erfolgt, erhält man ein Format, das nur in einer Dimension von der Portion mit dem etwas höheren Gewicht abweicht. Beispielsweise bei einer flachen Portion empfiehlt es sich, das geringere Volumen in einer geringeren Dicke unterzubringen, so daß es verpackungstechnisch keine Probleme gibt.

Sofern die Umformstufe den Teilungsstufen nachgeordnet ist, läßt sich der Portion jede gewünschte Form geben. So kann die Endform der Form eines aus Frischfisch oder Frischfleisch geschnittenen Filets täuschend ähnlich sein.

Es ist bekannt, daß das Pressen auf die Qualität des Lebensmittels Einfluß hat. Deshalb sollte der Verformungsgrad nicht allzu groß sein. Gute Ergebnisse hat man mit einem Verformungsgrad von maximal 50 %, besser noch maximal 30 %, erzielt. Durch eine derart geringe Verformung kann auch die Qualtität des Lebensmittels gesteigert werden. So wird durch das Pressen Fleisch zarter.

Sofern die Umformung durch Pressen am Ende der Teilungsstufen erfolgt, kann das Pressen mit mehreren kleineren Einheiten gleichzeitig erfolgen. Auf diese Art und Weise lassen sich verschiedenartige Lebensmittel komponieren. Als Beispiel sei ein Cordon Bleu genannt, bei dem zwei kleinere Einheiten aus Fleisch mit einer dazwischenliegenden Portion aus Käse gemeinsam durch Pressen umgeformt werden.

Im folgenden wird die Erfindung anhand einer Zeichnung näher erläutert. Im einzelnen zeigen:
- Figur 1: einen quaderförmigen Block aus einem tiefgefrorenem Lebensmittel mit den angedeuteten Teilungsebenen,
- Figur 2: ein aus der kleinsten Einheit nach dem mehrstufigen Teilen des Blockes gemäß Figur 1 umgeformte Portion
**und**
- Figur 3: einen quaderförmigen Block aus einem tiefgefrorenem Lebensmittel mit nach herkömmlichen Verfahren gelegten Teilungsebenen.

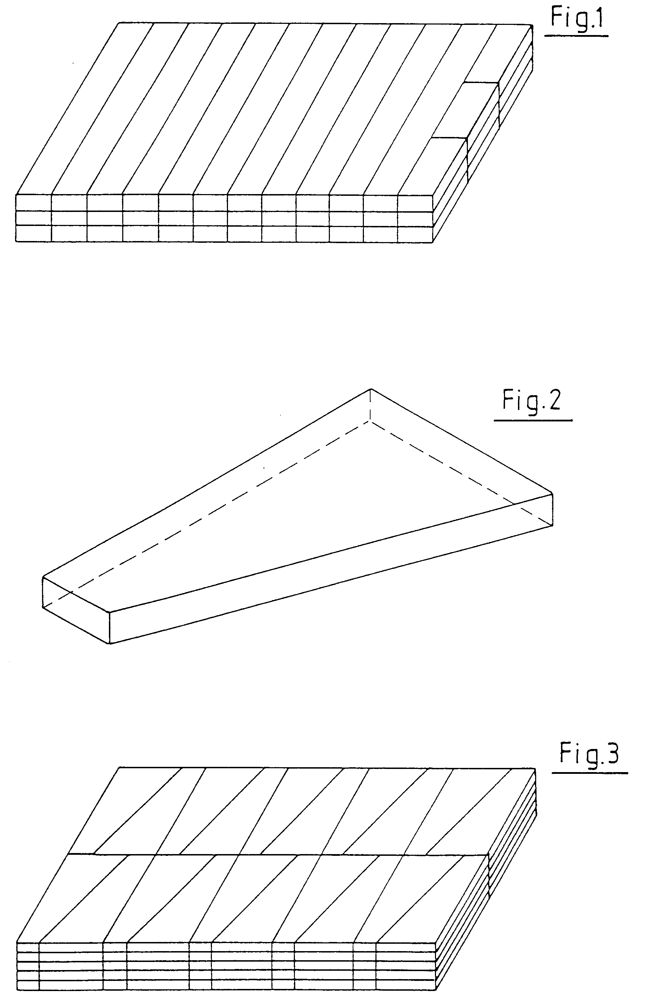

Ein zum Portionieren bestimmter quaderförmiger Block aus tiefgefrorenem Lebensmittel hat die in Figur 1 genannten Abmessungen. Diese Abmessungen ergeben sich nach dem Besäumen des in der Fleischfabrik oder Fischfabrik tiefgefrorenen Blockes.

Dieser Block wird in einer ersten Teilungsstufe in drei Riegel mit einer Breite von 84,26 mm aufgeteilt. In einer zweiten Teilungsstufe erfolgt die Aufteilung der Riegel in Platten mit einer Dicke von 20,5 mm. In einer dritten Teilungsstufe erfolgt die Aufteilung der Platten auf eine Breite von 39,61 mm. Die so erhaltene Quaderform ist die Vorform für die anschließende Umformstufe. In einer allseits geschlossenen Form erhält die Portion die in Figur 2 dargestellte Trapezform.

Bei dieser Art der Portionierung erhält man aus dem Block mit einem Gewicht von 7,48 kg 108 Portionen mit einem Produktgewicht von 66,72 g, das im Toleranzbereich des angestrebten Gewichtes von 67 g liegt.

Bei dem bekannten Portionierverfahren der Figur 3 erfolgt das Portionieren ausschließlich durch Teilen.

Ähnlich dem erfindungsgemäßen Verfahren wird in einer ersten Teilungsstufe der Block in Riegel, in diesem Fall in zwei Riegel, mit einer Breite von 126,7 mm durch einen Teilungsschnitt aufgeteilt.

In der zweiten Teilungsstufe erfolgt eine Aufteilung in Platten, indem die Riegel in vier Teilungsebenen geteilt werden. In der letzten Teilungsstufe erfolgt dann ein Quer- und Diagonalschnitt, um die gewünschte Trapezform zu erhalten.

Ein Vergleich der trapezförmigen Portion gemaß Figur 2 nach der Erfindung mit der trapezförmigen Portion der Figur 3 nach dem Stand der Technik zeigt, daß die für Verpackungszwecke wichtigen Längen- und Breitenverhältnisse in beiden Fällen gleich sind. Lediglich in der Höhe ist die Portion nach der Erfindung etwas kleiner. Diese geringe Abweichung ist aber ohne praktische Bedeutung. Entscheidend ist, daß im Stand der Technik die Portion 70,98 g und damit erheblich über dem angestrebten Gewicht von 67 g liegt, während bei der erfindungsgemäßen Portion das angestrebte
Gewicht von 67 g unter Berücksichtigung der zulässigen Toleranz eingehalten ist. Das führt dazu, daß bei dem Verfahren nach dem Stand der Technik die Ausbeute pro Block 100 Portionen und bei der Erfindung 108 Portionen beträgt.

Die Vorteile des erfindungsgemäßen Verfahrens mit der hohen Ausbeute ergeben sich auch dann, wenn in einer Zwischenstufe die Umformung erfolgt. Denkbar wäre, daß nach der ersten Teilungsstufe, in der die Riegel mit der Breite von 84,26 mm erhalten werden, ein Umformen dergestalt stattfindet, daß die Riegel eine Breite von 126,7 und eine Länge von rund 580 mm erhalten. In anschließenden Teilungsstufen erfolgt dann eine Querteilung und Diagonalteilung der Riegel und in einer letzten Stufe oder umgekehrt die Aufteilung in die dünnen, trapezförmigen Portionen.

Diese Gegenüberstellung zeigt die Überlegenheit des erfindungsgemäßen Verfahrens. Ein weiterer Vorteil der Erfindung besteht aber darin, daß die Form der gewünschten Portion nicht streng geometrisch zu sein braucht, also eine Quaderform oder Trapezform oder ähnliches, sondern jede beliebige Form haben kann, wenn die Umformstufe die letzte Stufe der Bearbeitung ist. Die Pressform bestimmt die Form der Portion.

## Patentansprüche

1. Verfahren zum Portionieren eines quaderförmigen Blockes aus tiefgefrorenem Lebensmittel, insbesondere Fisch oder Fleisch, durch mehrstufiges Teilen in von Stufe zu Stufe kleinere, gleichformatige Einheiten mit geraden Schnittflächen,
**dadurch gekennzeichnet,** daß die kleineren Einheiten nach mehreren Teilungsstufen, mindestens jedoch nach der letzten Teilungsstufe durch Pressen derart umgeformt werden, daß die dabei erhaltene Form entweder die gewünschte Endform ist oder für die weiteren (n) Teilungsstufe (n) hinsichtlich der gewünschten Endform günstiger ist.

2. Verfahren nach Anspruch 1,
**dadurch gekennzeichnet,** daß der Verformungsgrad bei der Umformung maximal 50 % beträgt.

3. Verfahren nach Anspruch 2,
**dadurch gekennzeichnet,** daß der Verformungsgrad bei der Umformung maximal 30 % beträgt.
